# EUROPÄISCHE PATENTSCHRIFT

(11) **EP 0 505 958 B1**
(45) Veröffentlichungstag und Bekanntmachung des Hinweises auf die Patenterteilung: **19.04.1995**
(21) Anmeldenummer: 92104981.3
(22) Anmeldetag: 20.03.1992
(51) Int. Cl.: G01F 1/26

(54) **Durchflussmesseinrichtung**
Flowmeter
Débitmètre

(30) Priorität: 23.03.1991 DE 4109694
(43) Veröffentlichungstag der Anmeldung: 30.09.1992
(73) Patentinhaber: Hess, Paul, Dipl.-Ing., D-47877 Willich (DE)
(72) Erfinder: Hess, Paul, Dipl.-Ing., D-47877 Willich (DE)
(74) Vertreter: Bonsmann, Manfred, Dipl.-Ing.

(56) Entgegenhaltungen:
- EP-A- 0 084 225
- EP-A- 0 099 712
- EP-A- 0 427 102
- WO-A-83/00220
- DE-A- 2 110 688
- GB-A- 2 068 560
- TECHNISCHES MESSEN TM. Bd. 57, Nr. 7/8, August 1990, MUNCHEN DE Seiten 281 -283; J. SMIGIELSKI: 'KLAPPEN-DURCHFLUSSUMFORMER MIT HALLGENERATOR-GEBER'

## Beschreibung

Die Erfindung betrifft eine Durchflußmeßeinrichtung nach dem Differenzdruckverfahren, insbesondere für ölhydraulische Medien, mit einem in einem Zylinder geführten federbelasteten Hubglied, welches bei einem Durchfluß entgegen der Federkraft eine radiale Blendenöffnung im Zylindermantel freigibt, wobei das Hubglied mit einem elektrischen Wegaufnehmer gekoppelt ist und das Ausgangssignal des Wegaufnehmers ein Maß für den Durchfluß ist, und die Blendenöffnung im wesentlichen die Form eines gleichschenkligen Dreiecks hat, dessen Spitze der Schließrichtung zugewandt ist und die der Spitze gegenüberliegende Seite der Blendenöffnung durch die Stirnfläche des federbelasteten Hubgliedes gebildet ist.

GB-A-2 068 560 offenbart eine Durchflußmeßeinrichtung nach dem Differenzdruckverfahren, bei dem die Blendenöffnung im Zylindermantel eine rechtwinklige Form aufweist. Die Durchfluß/Hubcharakteristik ist bei dieser Vorrichtung ebenso linear wie die Ausgangssignal/Hubcharackteristik des induktiven Wegaugnehmers, sodaß sich das Ausgangssignal linear mit dem Durchfluß ändert.

Die nachveröffentlichte EP-A-427 102 offenbart eine Durchflußmeßeinrichtung mit einer rechtwinkligen Blendenöffnung, wobei aufgrund der Federkennlinie die Durchfluß/Hubcharakteristik nichtlinear ist. Der Wegaufnehmer, der durch einen Magnetstab und einen Hallsensor gebildet wird, ist so ausgelegt, daß die Ausgangssignal/Hubcharakteristik mit der nichtlinearen Durchfluß/Hubcharakteristk übereinstimmt, so daß der Zusammenhang zwischen Ausgangssignal und Durchflußmenge linear ist.

Eine Durchflußmeßeinrichtung gemäß Oberbegriff ist aus der DE-OS 21 10 688 bekannt. Infolge der in Form eines gleichschenkligen Dreiecks gestalteten Blendenöffnung hat diese eine progressive Charakteristik, die auf dem quadratischen Öffnungsverhalten eines Dreiecks und der Kraftzunahme der Vorspannfeder beruht. Bei der bekannten Durchflußmeßeinrichtung ist außerdem das Ausgangssignal des induktiven Wegaufnehmers linear zum Hub. Somit ist insgesamt gesehen das elektrische Ausgangssignal des Wegaufnehmers bei der bekannten Durchflußmeßeinrichtung nicht proportional zu dem Durchfluß, und es ist für eine Anzeige erforderlich, das Signal in eine durchflußproportionale Charakteristik umzuwandeln, beispielsweise durch eine entsprechend progressive Skalierung der Meßeinrichtung. Zur Meßwertverarbeitung ist das Ausgangssignal der bekannten Durchflußmeßeinrichtung schlecht geeignet, da hierfür ein lineares Signal benötigt wird. Andererseits erbringt aber die Blendenöffnung in Gestalt eines gleichschenkligen Dreiecks, auf der das nicht proportionale Ausgangssignal des elektrischen Wegaufnehmers bei der bekannten Durchflußmeßeinrichtung beruht, schon bei kleinen Durchflüssen einen großen Hubweg und ein günstiges Verhältnis von Blendenquerschnitt zu benetztem Umfang. Daher ist eine derartige Blendenöffnung besonders gut auch für die Erfassung kleinster Durchflüsse auch bei veränderlicher Viskosität geeignet.

Der Erfindung liegt die Aufgabe zugrunde, eine Durchflußmeßeinrichtung der eingangs genannten Art dahingehend zu verbessern, daß diese trotz der progressiven Durchflußcharakteristik der Blendenöffnung an dem elektrischen Wegaufnehmer ein lineares elektrisches Ausgangssignal abgibt.

Diese Aufgabe wird erfindungsgemäß durch eine Durchflußmeßeinrichtung gemäß Anspruch 1 gelöst. Dadurch daß das elektrische Ausgangssignal des Wegaufnehmers die gleiche progressive Charakteristik wie die Durchflußcharakteristik der Blendenöffnung aufweist, wird die Kennlinie des elektrischen Wegaufnehmers mit der Kennlinie der Blendenöffnung in Übereinstimmung gebracht. Die einfache geometrische Form der Blendenöffnung hat dabei den Vorteil einer leicht reproduzierbaren Herstellbarkeit.

Die Entstehung des gewünschten linearen elektrischen Ausgangssignals kann auch wie folgt erklärt werden:

Infolge der progressiven Durchflußcharakteristik der Blendenöffnung ist die Kennlinie des Hubweges des Hubgliedes bezogen auf die Querschnittszunahme der Blendenöffnung degressiv, denn wenn man davon ausgeht, daß bei einem bestimmten Hubweg des Hubgliedes eine bestimmte Querschnittszunahme erfolgt, so wird eine Verdoppelung dieses Querschnittes nicht bei einer Verdoppelung des Hubweges erreicht, sondern bei einer geringeren Zunahme des Hubweges. Da das Hubglied ("degressiv") mit dem "progressiven" elektrischen Wegaufnehmer gekoppelt ist, wird auf diese Weise infolge der "Progressivität" des elektrischen Ausgangssignals in Abhängigkeit vom Weg die "Degressivität" des Weges kompensiert, so daß sich im Ergebnis an dem Wegaufnehmer ein lineares elektrisches Ausgangssignal ergibt.

Die Dreiecksöffnung behält in vorteilhafter Weise auch bei kleinsten Öffnungsquerschnitten immer die Charakteristik einer Blendenöffnung und ist dadurch weitgehend viskositätsunempfindlich, was für die Erfassung kleiner und kleinster Durchflüsse Voraussetzung ist.

Erfindungsgemäß ist vorgesehen, daß der elektrische Wegaufnehmer ein induktiver Wegaufnehmer ist, und daß sich der Kern des induktiven Wegaufnehmers in der Nullstellung (Schließstellung) des Hubgliedes unterhalb des Linearbereiches der Hubkennlinie des Wegaufnehmers in der Nähe des unteren Scheitelpunktes dieser Hubkennlinie befindet. Der normale Arbeitsbereich eines induktiven Wegaufnehmers liegt - bezogen auf die Kennlinie des Wegaufnehmers - in dem Bereich der größten Linearität der Kennlinie, die sich oberhalb und unterhalb des Wendepunktes der Kennlinie befindet. In der Praxis bedeutet dies, daß bei induktiven Wegaufnehmern üblicherweise der Kern in der Nullstellung in Nähe der Mitte zwischen den beiden Spulen angeordnet ist. Durch die erfindungsgemäße Maßnahme wird demgegenüber in höchst einfacher Weise die gewünschte progressive Charakteristik des elektrischen Ausgangssignals des Wegaufnehmers erreicht, indem der Kern in der Nullstellung gegenüber der Mitte zwischen den Spulen versetzt angeordnet ist.

In weiterer Ausbildung der Erfindung kann vorgesehen sein, daß gleichmäßig über den Umfang des Zylindermantels verteilt mehrere radiale Blendenöffnungen angeordnet sind. Dadurch werden einseitige radiale Anpreßkräfte vermieden, und es können keine Reibkräfte auftreten, die eine Umkehrspanne des Meßwertes zwischen steigender und fallender Strömungstendenz zur Folge haben könnte.

In weiterer Ausgestaltung der Erfindung kann vorgesehen sein, daß die radiale Blendenöffnung bzw. die radialen Blendenöffnungen sich zur Außenseite des Zylindermantels konisch erweiternd ausgebildet sind. Dadurch wird eine weitere Steigerung der Viskositätsunabhängigkeit des Blendenquerschnittes erreicht.

In besonders vorteilhafter Ausgestaltung der Erfindung kann weiterhin vorgesehen sein, daß das federbelastete Hubglied einen Scheibenkolben aufweist, der als Führungsstütze ein Kolbenstangenlager aufweist und somit nur eine kleine Haftoberfläche hat. Eine solche Form ist wenig klemmanfällig infolge Verschmutzung und bringt ebenfalls eine geringe Umkehrspanne mit sich. Ein weiterer Vorteil besteht darin, daß die bewegten Massen sehr gering sind. Hierdurch sind auch Messungen im dynamischen Bereich möglich.

Im oberen Durchflußbereich wirken viskositätsabhängige Strömungskräfte auf das Hubglied ein. Dadurch wird bei dem Gegenstand der Erfindung bei sinkender Viskosität das Hubglied in Öffnungsrichtung bewegt, was wiederum ein zu großes Ausgangssignal zur Folge hat. Um diesem Fehler entgegenzuwirken, ist erfindungsgemäß weiterhin vorgesehen, daß die Anströmseite des Scheibenkolbens von der Steuerkante ausgehend konisch bzw. ballig zur Mitte hin zulaufend ausgebildet ist. Hierdurch entsteht bei der Ablenkung des Durchflusses von der axialen Zulaufrichtung in die radiale Ablaufrichtung eine zusätzlicher Strömungswiderstand, welcher sich in Form einer Reaktionskraft auf das Hubglied auswirkt. Mit abnehmender Viskosität sinkt diese Kraft und das Hubglied bewegt sich in Schließrichtung, wodurch somit die geschilderte viskositätsbedingte Öffnungsbewegung des Hubgliedes kompensiert wird. Dadurch ergibt sich eine Viskositätsunabhängigkeit auch im oberen Durchflußbereich und somit im gesamten Durchflußbereich.

In weiterer Ausgestaltung der Erfindung kann vorgesehen sein, daß der Zylindermantel gegenüber dem Gehäuse der Durchflußmeßeinrichtung durch eine elastische Manschette abgedichtet ist, die bei einer Strömung entgegen der bestimmungsgemäßen Durchflußrichtung einen ringförmigen Öffnungsdurchflußquerschnitt freigibt. Bei Auftreten von Druckstößen von der Austrittsseite her wird dadurch ein schädlicher Druckanstieg an der Oberseite des Hubgliedes und eine dadurch möglicherweise vorhandene Gefahr von Beschädigungen vermieden.

In weiterer Ausgestaltung der Erfindung kann vorgesehen sein, daß dem Ausgangssignal des induktiven Wegaufnehmers im Meßverstärker das elektrische Ausgangssignal eines Temperaturfühlers zum Zwecke der Kompensation einer Temperaturabhängigkeit des Wegaufnehmers zugeführt wird. Die Temperaturabhängigkeit des Wegaufnehmers ist nur abhängig von der Temperatur im Spulensystem des Wegaufnehmers und nicht der jeweiligen Durchflußgröße. Es wird daher ein temperaturproportionales Signal des Temperaturfühlers zum Ausgangssignal des Wegaufnehmers addiert.

Die Erfindung wird nachfolgend anhand des in der Zeichnung dargestellten Ausführungsbeispiels näher erläutert. Es zeigen:
- Fig. 1: eine Schnittdarstellung durch ein schematisch dargestelltes Ausführungsbeispiel einer Durchflußmeßeinrichtung gemäß der Erfindung;
- Fig. 2: eine schematische perspektivische Darstellung eines Abschnittes des Zylindermantels mit einer Blendenöffnung und dem in dem Zylindermantel befindlichen Hubglied;
- Fig. 3: eine Diagrammdarstellung der Durchflußcharakteristik der Blendenöffnung;
- Fig. 4: eine Diagrammdarstellung der Charakteristik des elektrischen Ausgangssignals des Wegaufnehmers;
- Fig. 5: eine Diagrammdarstellung des sich erfindungsgemäß ergebenden elektrischen Ausgangssignals des Wegaufnehmers in Abhängigkeit von dem Durchfluß.

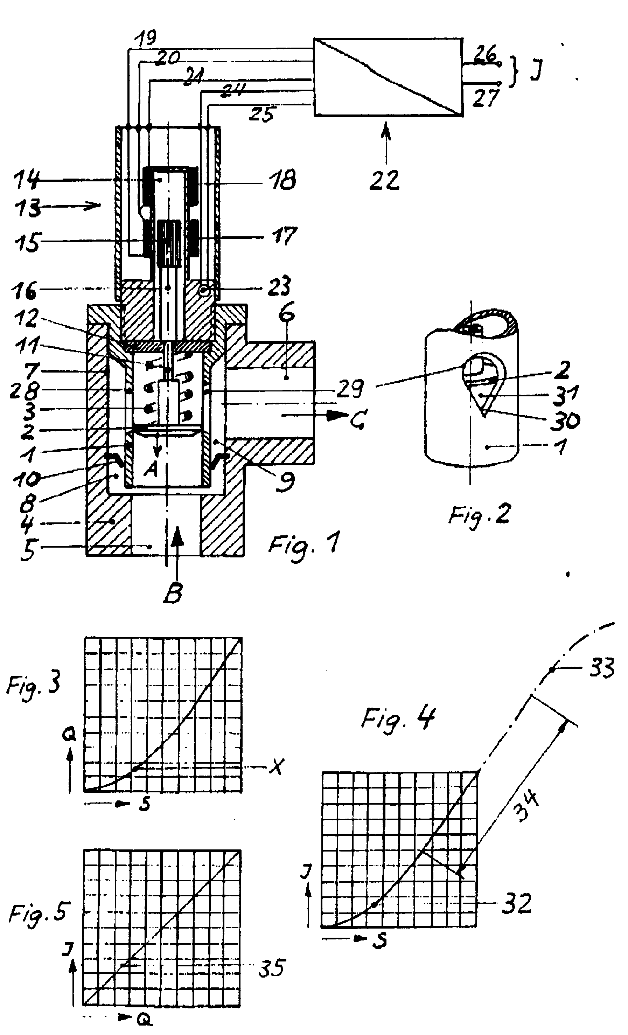

Die in Fig. 1 schematisch dargestellte Durchflußmeßeinrichtung weist ein in einem Zylinder 1 geführtes Hubglied 2 auf, welches durch die Kraft einer Feder 3 die in der Zeichnung dargestellte Schließstellung einnimmt. Ein Gehäuse der Durchflußmeßeinrchtung trägt die Bezugsziffer 4. In dem Gehäuse 4 ist eine Zuflußöffnung 5 und eine Abflußöffnung 6 für das Durchflußmedium. Der Zylinder 1 sitzt in einer Bohrung 7 des Gehäuses 4. Die dadurch gebildete Eintrittskammer 8 und die Austrittskammer 9 sind durch eine elastische Manschette 10 voneinander getrennt. Die Manschette 10 ist in der Bohrung 7 befestigt und liegt mit ihrer beweglichen Lippe gegen die Außenseite des Zylindermantels 1 an. Das Hubglied 2 weist an seinem oberen Ende eine Kolbenstange 11 auf, die durch eine zentrische Bohrung eines Führungsdeckels 12 geführt ist. Oberhalb des Führungsdeckels 12 befindet sich ein Wegaufnehmer 13. Der Wegaufnehmer 13 weist eine druckdichte Kammer 14 auf, in welcher ein Spulenkern 15 über eine Stange 16 starr mit der Kolbenstange 11 verbunden ist. Außerhalb der druckdichten Kammer 14 sind Spulen 17 und 18 angeordnet, die über Leitungen 19 bis 21 mit einem schematisch dargestellten Meßverstärker 22 verbunden sind. Mit 23 ist ein Temperaturfühler bezeichnet, der über Leitungen 24 und 25 ebenfalls mit dem Meßverstärker 22 verbunden ist. Das Ausgangssignal J des Meßverstärkers liegt an Leitungen 26 und 27 an.

Der Zylindermantel 1 weist auf gegenüberliegenden Seiten Blendenöffnungen 28 und 29 auf, deren wirksame Bereiche die Form eines Dreieckes haben, wobei die Spitze 30 der Schließrichtung A des Hubgliedes 2 zugewandt ist. Die der Spitze 30 gegenüberliegende Seite der Blendenöffnung wird durch die Stirnfläche des federbelasteten Hubgliedes 2 gebildet. Figur 1 zeigt das Hubglied in Schließstellung, während Fig. 2 das Hubglied in einer Öffnungsstellung zeigt, so daß die in Fig. 2 mit 31 bezeichnete dreieckige wirksame Blendenöffnung sichtbar ist.

Der Spulenkern 15 des induktiven Wegaufnehmers 13 befindet sich unterhalb der Mitte zwischen den beiden Spulen 17 und 18. Dies bedeutet, daß das Ausgangssignal des Wegaufnehmers 13 dem in Fig. 4 schematisch dargestellten progressiven Kurvenverlauf 32 aufweist. Fig. 4 zeigt die Abhängigkeit des Ausgangssignals J vom Hubweg s. In Fig. 4 ist zusätzlich der weitere Verlauf der Charakteristik über den Arbeitsbereich hinaus strichpunktiert dargestellt und mit 33 bezeichnet. Üblicherweise werden induktive Wegaufnehmer so betrieben, daß das elektrische Ausgangssignal nur den mit 34 bezeichneten, im wesentlichen linearen Bereich, erfaßt. Durch die außermittige Verschiebung des Kerns 15 wird demgegenüber die progressive Charakteristik 32 erreicht.

Die Durchflußmeßeinrichtung arbeitet wie folgt:

Das zu messende Medium wird der Zuflußöffnung 5 unter Druck in Pfeilrichtung B zugeführt und hebt das Hubglied 2 entgegen der Kraft der Feder 3 an. Dadurch werden die gegenüberliegend angeordneten Blendenöffnungen 28 und 29 freigegeben, und das Medium gelangt in die Austrittskammer 9 und strömt durch die Abflußöffnung 6 in Pfeilrichtung C wieder aus. Die Blendenöffnungen weisen die in Fig. 3 schematisch dargestellte Durchflußcharakteristik auf. In Fig. 3 ist auf der Ordinate die Durchflußmenge Q und auf der Abszisse der Hubweg des Hubgliedes 2 dargestellt. Die dargestellte progressive Charakteristik ergibt sich zum einen aus der dreieckförmigen Blendenöffnung und zum anderen aus der zunehmenden Federkraft der Feder 3.

Infolge der starren Verbindung des Hubgliedes 2 mit dem Spulenkern 15 wird der Spulenkern 15 mit dem Hubglied 2 in Abhängigkeit von dem Durchfluß bewegt, so daß das Ausgangssignal J des Meßverstärkers 22 des Wegaufnehmers ein Maß für den Durchfluß ist.

Wie ein Vergleich der Figuren 3 und 4 ergibt, weisen beide dort dargestellten Kurven die gleich progressive Charakteristik auf bzw. die Kurven sind deckungsgleich. Dies hat zur Folge, daß die Kennlinie der Durchflußcharakteristik in Übereinstimmung mit der wirksamen Kennlinie des induktiven Wegaufnehmers 13 gebracht wurde, was im Ergebnis zu dem in Fig. 5 dargestellten elektrischen Ausgangssignal J in Abhängigkeit von dem Durchfluß Q führt. Der Kurvenverlauf des elektrischen Ausgangssignals ist mit 35 bezeichnet und ist eine Gerade. Dies bedeutet, daß der Wegaufnehmer 13 letztlich ein lineares elektrisches Ausgangssignal abgibt, was darauf beruht, daß die in Fig. 3 und in Fig. 4 dargestellten progressiven Kennlinien deckungsgleich sind.

Die Manschette 10 hat zum einen die Aufgabe, die Eintrittskammer 8 von der Austrittskammer 9 druckdicht abzutrennen. Dazu legt sich die Lippe der elastischen Manschette bei Druck in Pfeilrichtung B druckdicht gegen die Außenseite des Zylindermantels 1 an. Bei einer entgegengerichteten Strömung hebt sich jedoch die Lippe der elastischen Manschette von dem Zylindermantel ab und gibt einen ringförmigen Öffnungsdurchflußquerschnitt von der Kammer 9 zur Kammer 8 frei, wodurch schädliche Druckerhöhungen auf das vorzugsweise einen Scheibenkolben aufweisende Hubglied verhindert werden.

## Patentansprüche

1. Durchflußmeßeinrichtung nach dem Differenzdruckverfahren, insbesondere für ölhydraulische Medien, mit einem in einem Zylinder (1) geführten federbelasteten Hubglied (2), welches bei einem Durchfluß entgegen der Federkraft eine radiale Blendenöffnung (28,29) im Zylindermantel freigibt, wobei das Hubglied mit einem induktiven Wegaufnehmer (13) gekoppelt ist und das Ausgangssignal J des Wegaufnehmers ein Maß für den Durchfluß Q ist, und die wirksame Blendenöffnung im wesentlichen die Form eines gleichschenkligen Dreiecks hat, dessen Spitze der Schließrichtung zugewandt ist und die der Spitze gegenüberliegende Seite der Blendenöffnung durch die Stirnfläche des federbelasteten Hubgliedes gebildet ist, dadurch gekennzeichnet, daß die Hubkennlinie, d.h. das elektrische Ausgangssignal J(s) des Wegaufnehmers (13) in Abhängigkeit vom Hubwegs die gleiche progressive Charakteristik (32) wie die Durchflußcharakteristik Q(s) (X) der Blendenöffnung (28, 29) in Abhängigkeit vom Hubwegs aufweist, indem sich der starr mit dem Hubglied verbundene Spulenkern (15) des induktiven Wegaufnehmers in der Nullstellung, d.h. der Schließstellung des Hubgliedes (2) unterhalb des Linearbereiches (34) im progressiven Bereich (32) der Hubkennlinie J(s) des Wegaufnehmers in der Nähe des unteren Scheitelpunktes dieser Hubkennlinie befindet.

2. Durchflußmeßeinrichtung nach Anspruch 1, dadurch gekennzeichnet, daß über den Umfang des Zylindermantels (1) verteilt mehrere radiale Blendenöffnungen (28, 29) angeordnet sind.

3. Durchflußmeßeinrichtung nach einem der Ansprüche 1 oder 2, dadurch gekennzeichnet, daß die radiale Blendenöffnung bzw. die radialen Blendenöffnungen (28, 29) sich zur Außenseite des Zylindermantels konisch erweiternd ausgebildet sind.

4. Durchflußmeßeinrichtung nach einem der Ansprüche 1 bis 3, dadurch gekennzeichnet, daß das federbelastete Hubglied (2) einen Scheibenkolben aufweist.

5. Durchflußmeßeinrichtung nach Anspruch 4, dadurch gekennzeichnet, daß die Anströmseite des Scheibenkolbens von der Steuerkante ausgehend konisch bzw. ballig zur Mitte hin zulaufend ausgebildet ist.

6. Durchflußmeßeinrichtung nach einem der Ansprüche 1 bis 5, dadurch gekennzeichnet, daß der Zylindermantel (1) gegenüber der Bohrung (7) der Durchflußmeßeinrichtung durch eine elastische Manschette (10) abgedichtet ist, die bei einer Strömung entgegen der bestimmungsgemäßen Durchflußrichtung (B,C) einen ringförmigen Öffnungsdurchflußquerschnitt freigibt.

7. Durchflußmeßeinrichtung nach einem der Ansprüche 2 bis 6, dadurch gekennzeichnet, daß dem Ausgangssignal des elektrischen Wegaufnehmers (13) im Meßverstärker das elektrische Ausgangssignal eines Temperaturfühlers (23) zum Zwecke der Kompensation einer Temperaturabhängigkeit des Wegaufnehmers zugeführt wird.

## Claims

1. A flowmeter operating on the basis of the differential pressure process, in particular for hydraulic-oil media, comprising a spring-loaded stroke member (2) which is guided in a cylinder (1) and which in the event of a through flow, in opposition to the spring force, opens a radial orifice (28, 29) in the cylinder casing, wherein the stroke member is coupled to an inductive travel sensor (13) and the output signal J of the travel sensor is a measurement in respect of the through flow Q, and the effective orifice is substantially in the shape of an isosceles triangle of which the tip is towards the closing direction and the side of the orifice, which is opposite to the tip, is formed by the end face of the spring-loaded stroke member, characterised in that the stroke characteristic curve, that is to say the electrical output signal J(s) of the travel sensor (13) in dependence on the stroke travel s, has the same progressive characteristic (32) as the through-flow characteristic Q(s) (X) of the orifice (28, 29) in dependence on the stroke travel, by virtue of the fact that, in the zero position, that is to say the closure position of the stroke member (2), the coil core (15) of the inductive travel sensor, which coil core is rigidly connected to the stroke member, is disposed beneath the linear region (34) in the progressive region (32) of the stroke characteristic curve J(s) of the travel sensor in the vicinity of the lower apex point of said characteristic curve.

2. A flowmeter according to claim 1 characterised in that a plurality of radial orifices (28, 29) are arranged distributed over the periphery of the cylinder casing (1).

3. A flowmeter according to one of claims 1 and 2 characterised in that the radial orifice or radial orifices (28, 29) are of a configuration which expands conically towards the outside of the cylinder casing.

4. A flowmeter according to one of claims 1 to 3 characterised in that the spring-loaded stroke member (2) has a disc piston.

5. A flowmeter according to claim 4 characterised in that the side of the disc piston which faces the incoming flow extends in a conical configuration from the control edge or is of a spherical configuration converging towards the centre.

6. A flowmeter according to one of claims 1 to 5 characterised in that the cylinder casing (1) is sealed relative to the bore (7) of the flowmeter by an elastic sealing ring (10) which, in the event of a flow in the opposite direction to the regular through-flow direction (B, C), opens an annular through-flow aperture cross-section.

7. A flowmeter according to one of claims 1 to 6 characterised in that the electrical output signal of a temperature sensor (23) is applied to the output signal of the electrical travel sensor (13) in the measuring amplifier, for the purposes of compensating for a temperature dependency on the part of the travel sensor.

## Revendications

1. Débitmètre fonctionnant selon le principe de la pression différentielle, en particulier pour des huiles de circuits hydrauliques, comprenant un organe coulissant (2) qui est guidé dans un cylindre (1), qui est soumis à l'action d'un ressort et qui libère une ouverture radiale formant diaphragme (28, 29) dans la surface latérale du cylindre à l'encontre de la force du ressort lors du passage du liquide, cependant que l'organe coulissant est accouplé à un capteur de déplacement inductif (13), que le signal de sortie J du capteur de déplacement constitue une mesure du débit Q, et que l'ouverture de travail du diaphragme présente pour l'essentiel la forme d'un triangle isocèle dont la pointe est tournée vers la direction de la fermeture, le côté de l'ouverture formant diaphragme qui est opposé à la pointe étant constitué par la surface frontale de l'organe coulissant soumis à l'action d'un ressort, caractérisé par le fait que la courbe caractéristique du déplacement en coulissement, c'est-à-dire le signal électrique de sortie J(s) du capteur de déplacement (13), présente, en fonction du déplacement en coulissement s, la même courbe caractéristique progressive (32) que la courbe caractéristique (X) du débit Q(s) de l'ouverture formant diaphragme (28, 29) en fonction du déplacement en coulissement s, du fait que le noyau (15) de la bobine du capteur de déplacement inductif qui est relié rigidement à l'organe coulissant, lorsqu'il est dans la position zéro, c'est-à-dire dans la position de fermeture de l'organe coulissant (2), se trouve au-dessous de la partie linéaire (34) de la courbe caractéristique J(s) du déplacement en coulissement du capteur de déplacement, dans la partie progressive (32) de celle-ci, et au voisinage du point inférieur de cette courbe caractéristique du déplacement en coulissement.

2. Débitmètre selon la revendication 1, caractérisé par le fait que plusieurs ouvertures radiales formant diaphragmes (28, 29) sont réparties sur le pourtour de la surface latérale du cylindre (1).

3. Débitmètre selon l'une des revendications 1 et 2, caractérisé par le fait que l'ouverture radiale formant diaphragme ou, respectivement, les ouvertures radiales formant diaphragmes (28, 29) s'élargissent en cône dans la direction du côté extérieur de la surface latérale du cylindre.

4. Débitmètre selon l'une des revendications 1 à 3, caractérisé par le fait que l'organe coulissant (2) qui est soumis à l'action d'un ressort comporte un piston en forme de disque.

5. Débitmètre selon la revendication 4, caractérisé par le fait que le côté amont du piston en forme de disque présente une forme conique ou sphérique, respectivement, en partant de son bord d'attaque et en allant vers son centre.

6. Débitmètre selon l'une des revendications 1 à 5, caractérisé par le fait que la surface latérale du cylindre (1) est rendue étanche par rapport au perçage (7) du débitmètre au moyen d'un manchon élastique (10) qui libère une section transversale annulaire de passage dans le cas d'un écoulement dans la direction opposée à celle (B - C) qui est prévue pour la circulation du liquide.

7. Débitmètre selon l'une des revendications 2 à 6, caractérisé par le fait qu'afin de compenser l'influence de la température sur le capteur de déplacement, le signal électrique de sortie d'un capteur de température (23) est ajouté dans l'amplificateur de mesure au signal de sortie du capteur électrique de déplacement (13).
